# EUROPEAN PATENT SPECIFICATION

(11) **EP 3 000 663 B1**
(45) Date of publication and mention of the grant of the patent: **17.01.2018**
(21) Application number: 14843219.8
(22) Date of filing: 09.04.2014
(51) Int. Cl.: B60R 16/00, H02K 5/00, H04L 29/08, F24F 11/00

(54) **SYSTEM FOR ACQUIRING AND MONITORING ELECTRICAL AND PNEUMATIC SIGNALS ORIGINATING FROM VENTILATION DEVICES**
SYSTEM ZUR ERFASSUNG UND ÜBERWACHUNG ELEKTRISCHER UND PNEUMATISCHER SIGNALE AUS LÜFTUNGSEINRICHTUNGEN
SYSTÈME D'ACQUISITION ET DE SURVEILLANCE DE SIGNAUX ÉLECTRIQUES ET PNEUMATIQUES PROVENANT DE DISPOSITIFS DE VENTILATION

(43) Date of publication of application: 30.03.2016
(73) Proprietor: Talleres Zitrón, S.A., 33392 Gijón (Asturias) (ES)
(72) Inventor: ARIAS ÁLVAREZ, Roberto, E-33392 Gijón (Asturias) (ES)
(74) Representative: Ungria López, Javier
(86) International application number: PCT/ES2014/070285
(87) International publication number: WO 2015/155383

(56) References cited:
- CN-U- 201 936 155
- US-A1- 2004 051 381
- US-A1- 2007 270 006
- US-B1- 6 567 709

## Description

### OBJECT OF THE INVENTION

The present invention relates to a system, which is compact and standard, for acquiring and monitoring electric and pneumatic signals coming from ventilation devices of the industrial type. The present invention, through the system here described, allows that the operation of a plurality of ventilation devices can be controlled without having to adapt the proposed solution to each type of ventilation device. Currently, monitoring acquisition devices for electric and pneumatic signals designed specifically for each ventilation system are used. It also allows the monitoring, control and management of both the electric and pneumatic part of the ventilation devices.

Preferably, the application of the present invention has been planned for ventilation devices or systems of the industrial type, such as road tunnel fans, mine fans, etc.

The technical field, to which the invention relates, is the management of electronic equipment for industrial ventilation.

### BACKGROUND OF THE INVENTION

At present, in the prior art, acquisition and monitoring systems of electric and pneumatic signals from ventilation devices that integrate the control of both the electric and pneumatic part of such devices do not exist.

Thus, in the general prior art, for the control of the electrical components of the ventilation devices PLCs are used with specific circuit boards in analogue signals. There are many alternative control devices of said electrical components from different manufacturers such as the Twido® and M340 Schnedier®, Bcxxxx, Bxxxxx and Cxxxxx Beckhoff®, Siemens® S7-300 and S7-1200 products, etc.

Normally, external transducers are used for the control of the ventilation devices' pneumatic components. These external transducers are basically of two types:
1- Differential pressure transducers (pressure and flow) with 4..20 mA interface that is connected to the electrical components of the control PLC. Again, there are many alternatives on the market from various manufacturers such as Yokowaga®, ABB® and Honeywell®.
2- Pressure static transducers (anti-pumping system). The selection of this type of transducer is normally for economic reasons as their cost is much lower than the differential pressure transducers. Again, there are many alternatives on the market from various manufacturers such as Honeywell® or Danfoss®. These assemblies are connected to a digital input of the control PLC for electrical components.

However, the need to incorporate separate devices for the control of the electric and pneumatic components involves the need for further wiring to connect the different components to the devices and between the devices, which in turn requires greater space. This increases the complexity of the assembly as well as the cost and time of installation of the ventilation equipment.

Document CN 201936155 U is known from the state of the art. This document discloses an online monitoring system for a bus ventilator.

Document US 6567709 B1 is also known from the prior art. This document discloses an integrated monitoring, diagnostics, shut-down and control system.

### DESCRIPTION OF THE INVENTION

The present invention relates to a system for acquiring and monitoring electric and pneumatic signals coming from ventilation devices, wherein the ventilation devices are preferably of the industrial type, as for example, fans for mines, industrial cooling fans or road tunnel fans. The invention is specified by the system of the independent claim 1. Further embodiments are specified in the dependent claims. Among the advantages of the present invention over the known state of the art, are the following:
- It minimizes the wiring between the system object of the present invention and the ventilation device. They are only connected to each other through conventional wiring and pneumatic hoses. This further reduces the cost and time of installation;
- It achieves standardization at the ventilation device control level. The state of the art uses a customized solution for each possible signal configuration for each ventilation device;
- Cost reduction, taking into account the following aspects:
   - Engineering: In the state of the art, customized diagrams and configurations for each ventilation device are made, while the present invention provides a standard solution.
   - Programming: In the state of the art, it is set to measure of each ventilation device and different systems are available according to the application.
   - Materials: It reduces manufacturing costs because it is a standard solution.
   - Test: It allows testing the control wiring at the factory instead of on site with the problems that this entails.
   - Training: A standard system benefits the staff training. In the state of the art, heterogeneous solutions are used depending on the particular problem.
   - Documentation: The generation of project documentation is homogenous with respect to the ventilation device.
- It increases the quality compared to other solutions of the state of the art. The wiring can be checked with the factory test. Currently this wiring presents errors until the moment of turning it on and has to be tested on site;
- It makes the turning on easier. As there are no wiring errors, the required set-up and turning on time is minimised.
- It facilitates the maintenance on the basis of the following aspects:
   - Diagnosis: It is possible to provide the system with a "diagnostic console" for local application, for example a touch panel supporting a Modbus communication protocol.
   - Replacement: The fully connectorized metallic enclosure (box), where the system, object of the present invention is integrated, facilitates the replacement for analysis and subsequent repair, off the building site.
   - Spare parts: This system becomes a reference of easily diagnosable and replaceable standard parts for fans, (currently several different equipments or systems are needed as spare parts, which makes the diagnosis substantially complex)
- Black Box: With the memory (Datalogger) integrated into the system it has a high value "black box" to record, analyse and diagnose problems that machines may suffer during their service life. At present, this information is never available, or the operator does not have it or does give it;
- Pneumatic measurement system: Detection of pumping is done by means of a differential pressure sensor, which is able to distinguish the OK, pumping and measurement problem (including plugged duct) condition. Currently, due to the cost, a digital pressure switch is used, which distinguishes OK and pumping, but not plugged duct condition. Therefore, this solution is an improvement.

### BRIEF DESCRIPTION OF THE FIGURES

In order to complement the description of the invention and its characteristics, is attached as an integral part of said description, the following figures:
Figure 1 shows a simplified block diagram of an embodiment of the electric and pneumatic signal acquisition and monitoring system, object of the present invention.
Figure 2 shows a front perspective view of an embodiment of the box with connectors where the system object of the present invention is integrated.
Figure 3 shows a rear perspective view of the box with connectors shown in Figure 2.
Figure 4 shows an example of the embodiment of the electric and pneumatic signal acquisition and monitoring system, object of the present invention, integrated into a comprehensive management system of an industrial fan for mines.

### DESCRIPTION OF A PREFERRED EMBODIMENT OF THE INVENTION

Following a description is made, with an illustrative and non-limiting character, of an exemplary embodiment of the invention, making reference to the numbering adopted in the figures.

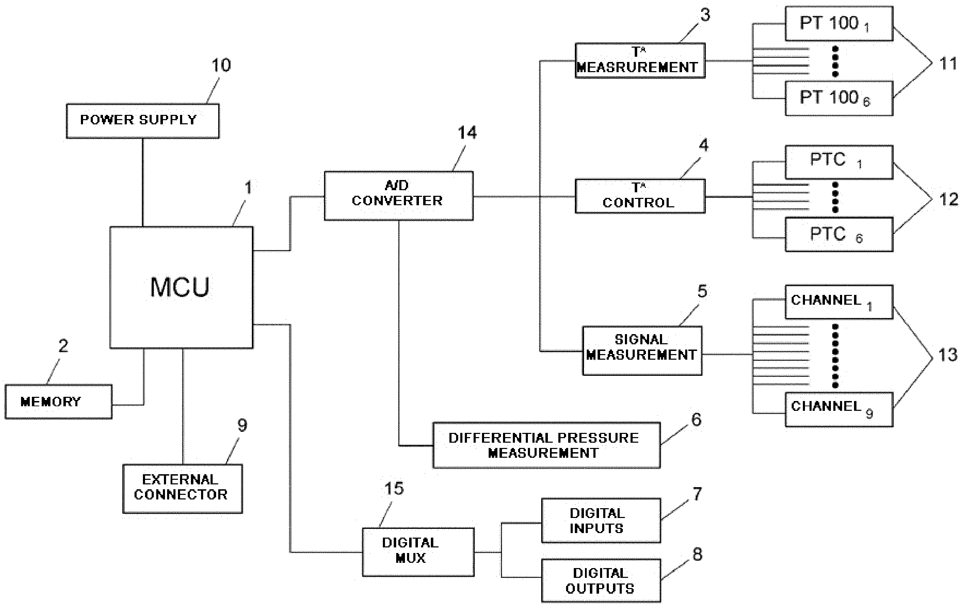

Figure 1 shows a simplified block diagram of an embodiment of the system for acquisition and monitoring of signals coming from ventilation devices, object of the present invention.

Thus the diagram shows a microprocessor (1) connected to a memory (2), such as a removable SD memory, wherein is stored information from the acquisition channels (3-8) of electric and pneumatic signals. The microprocessor (1) manages and exchanges information with the ventilation device and an external control system. The information stored in memory is CSV format, easily editable with computer spreadsheets. The memory also serves as a safety box or black box for the operation of the ventilation device.

The electric and pneumatic signals come from a ventilation device of industrial type (not shown) and therefore the acquisition channels (3-8) are connected to various measuring devices and sensors integrated in said ventilation device.

The communication of the microprocessor (1) with the external control system (not shown) is performed through an external connector (9). The system also has auxiliary power means (10) which in this particular example are integrated within the acquisition and monitoring system. In addition, external power to 24 VDC is used.

The acquisition channel for temperature measurement (3) in turn, has 6 PT100 channels (11). These channels (11) are connected to various temperature sensors in the ventilation device and return temperature values measured in °C.

The acquisition channel for temperature control (4) in turn, has 6 PTC channels (12) and returns the OK or FAULT state. The PTC channels (12) internally measure the resistance value and if they are within a previously set threshold, said channels send the OK status to the processor, if the resistance value is outside the threshold, said channels send the FAULT state to the processor.

The acquisition channel for measuring signals (5), has 9 PTC analogue reading channels 4..20 mA (13) and returns the state through an integer value.

The pneumatic signals acquisition channel (6) has 6 channels for measuring differential pressure, which measures the differential pressure in several sensors installed in the ventilation device and returns the measured pressure value by an integer value in Pascals. The difference in pressure measured by these sensors may be between two points of the fan itself or from one point of the fan relative to the atmospheric pressure.

Information sent from these acquisition channels (3-6) to the microprocessor (1) previously passes through an analogue/digital converter (14).

The digital input acquisition channel (7) in turn, has 8 power free digital input channels.

The digital output acquisition channel (8) has 8 relay outputs.

Both the digital input acquisition channel (7) and the digital output acquisition channel (8) are connected to the microprocessor through the interposition of a digital multiplexer (15).

In this embodiment, the temperature measurement acquisition channels (3), temperature control channels (4), signal measuring channels (5), digital input (7) and digital output channels (8) are electric signal acquisition channels.

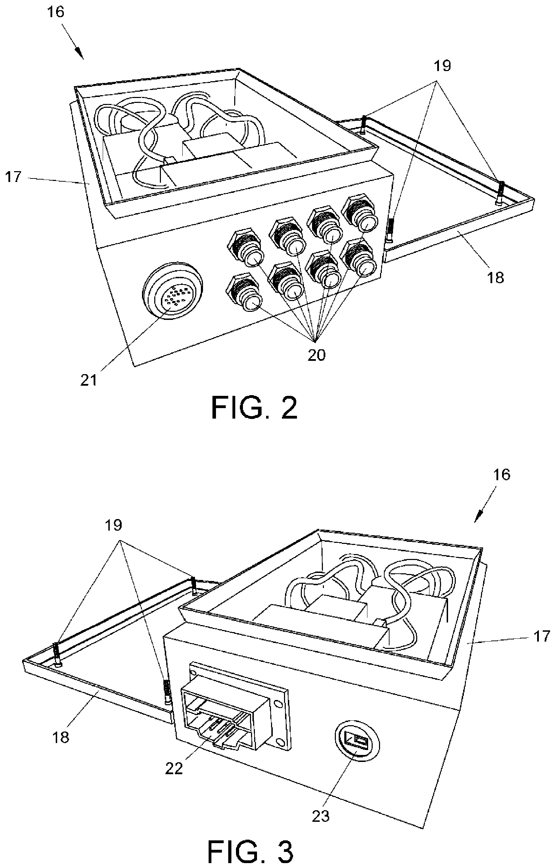

Figure 2 shows a front perspective view of the embodiment of a metal enclosure (16) with electromagnetic shielding EMC and high-level protection IP66. Since the system object of the present invention is installed in proximity to industrial fans, it is necessary to protect the internal electronics from vibration, dirt and also knocks. For that reason, it is planned to integrate the electronics into an enclosure or box (16) formed by a main body (17) and a cover (18) to make the electronics accessible. The cover (18) is joined to the main body (17) by screws (19). Additionally said main body has the necessary connectors to connect the acquisition and monitoring system with the fan and the external control system. Thus the Figure 2 shows the connectors (20) of the acquisition channel of the system object of the invention (which is integrated in the box (16)) with the ventilation device and the connector (21) which connects the wired signals from the measuring sensors PT100, PTC, or sensors for measuring vibrations, etc.

Figure 3 shows a rear perspective view of the metallic enclosure (16) of figure 2. In this view the power and communication connection with the external control system and the fan itself, which is by means of an industrial type power connector (22) with terminal screws, is shown. This part is made with a screw system, as it has to be connected on site, to facilitate the connection. This power connector (22) as well as connecting to an external power supply is also used as an interface for connection via Modbus RTU protocol for great distances and low rate data transmission. The communications connector (23) with the external control system and the fan is used as an interface with Modbus TCP communication protocol for short distances and high rate data transmission. The communications connector (23) may be a female RJ45 port.

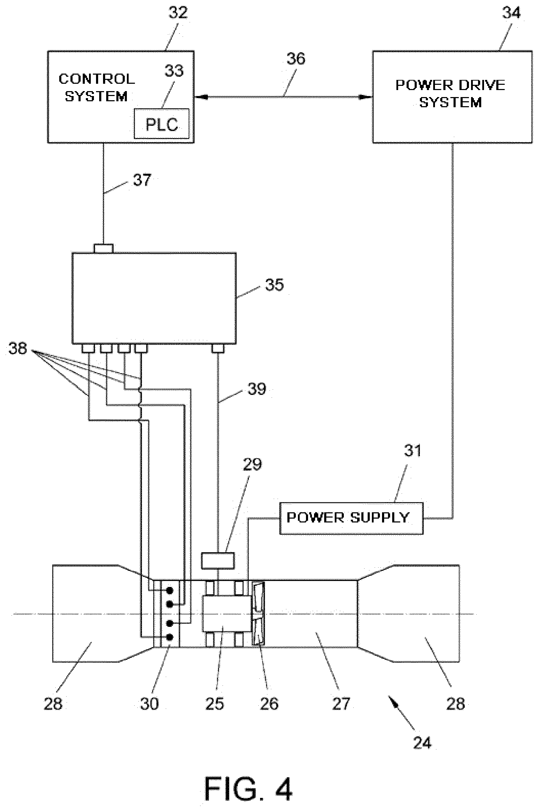

Figure 4 shows a block diagram of the embodiment of the present invention wherein the electric and pneumatic signal acquisition and monitoring system object of the present invention is integrated into an management system of an industrial fan for a mine. In addition, the industrial fan (24) responsible for the ventilation of the mine's ducts formed by a motor (25) that drives the blades of the fan's disk (26) is shown. Said motor (25) is fixed inside the fan housing and on the ends of said housing (27) two separate silencers (28) are fixed. The fan's motor (25) is connected to a power supply device (31) and to a signal junction box (29). The housing (27) has integrated pneumatic measuring devices (30).

The integrated management system also comprises an external control system (32) controlled by a PLC (33) and a power drive system (34) that includes a frequency shifter inverter, soft starter or other type of drive operation. The external control system (32) is connected to the acquisition and monitoring system (35) to supply power and to obtain information on electric and pneumatic signals acquired from the fan (24). The power drive system (34) is directly connected to the motor (25) of the fan through the supply device (31) and is in charge of the driving, stopping and starting of the fan (24), etc. There is an auxiliary control connection (36) between the control system and the power drive system. This connection (36) is used to manage from the external control system (32) the power drive system (34)

The acquisition and monitoring system (35), object of the present invention, has a power and communication connection (37) which communicates it with the external control system (32), connections (38) with pneumatic measuring devices (30) located in the housing (27) of the fan for measuring the total pressure, static pressure and fan pump. Finally, it also has a multi-wire connection (39) for receiving electric signals from the fan through the signal box (29). This signal box (29) receives and centralizes electric signals from the fan (24) to subsequently transmit them to the acquisition and monitoring system (35).

Connecting the pneumatic signal acquisition channel (38) with corresponding measuring elements of the fan (24) is performed by automatic pneumatic fittings (analogous to those commonly used in this type of fan).

Connecting the electric signal acquisition channels (39) with corresponding measuring elements of the ventilation device is performed by a multi pin connector with high degree protection IP67.

The information acquired from these signals would be stored automatically in the acquisition and monitoring system's memory. Once sent to the external control system (32) this information can be used to generate alarms or control sequences.

The temperature measurement acquisition channels (PT100) are connected to temperature measurement sensors integrated in the fan. These sensors are thermal resistance of the PT100 type. When the acquisition channel detects the disconnection of the sensor (for example due to wire breakage or failure of connection), it activates the output at 200 °C (maximum temperature value) to notify the processor of the problem. Such channels capture information regarding the temperature (in °C) from various elements of the fan, typically to realise protective functions of the drive mechanism (the motor windings, bearings ...). This is of interest for predictive maintenance as it permits the diagnosis of quantitative deterioration of the fan. Sometimes it can be used for environmental control (air temperature).

The temperature control acquisition channels (PTC) are connected to temperature measurement sensors integrated in the fan. These sensors are thermal resistance of the PTC type. When the acquisition channel detects the disconnection of the sensor (for example due to wire breakage or connection failure), it activates its output so as to notify the processor of the problem, that is, it activates the alarm. The value returned by this type of channel is a digital value 0-1 (OK, Fault) depending on whether the temperature sensor connected to the PTC element is above or below the temperature at which the PTC sensor is calibrated. This type of acquisition channels is typically used to protect bearings and windings. Unlike the PT100, in this case, the actual temperature at which the element to be protected is, may not be known. Its purpose is to protect the fan, and is virtually of no interest in predictive maintenance since it gives no information until the defect occurs (sometimes it has two PTC sensors connected to the same element, one of them calibrated lower so as to give a prior warning).

The acquisition channels for signal measurement are connected to measurement devices with output in 4..20 mA. When the acquisition channel detects the disconnection of the sensor (for example due to wire breakage or failure of connection) it returns a value of 0 mA. The value returned by this type of channel is a numeric value in the range 0, 400-2000 mA. This type of channel is very versatile, as it allows the connection of sensors with a 4..20 mA transducer which is a standard widely used in the industrial field. A typical application in ventilation applications is the connection of vibration transducers. In this case, it would allow mechanical protection of the fan and would provide information for preventive maintenance. Another common application is the connection of environmental transducers, pressure, humidity, gases, etc. This type of acquisition channel provides an industry standard interface to provide versatility to the system.

Pneumatic acquisition channels are connected to pressure differential measurement sensors capturing pressure values in Pascals (range: -5000, 5000 Pa). The monitoring of these measures can be used for two purposes: measuring and protection.

### 1. Measurement:

Measuring the total pressure and differential pressure, permits the pressure and flow provided by the fan to be known. The main objects of this measurement are environmental control and energy saving as it would allow an adjustment of the speed according to necessity, reducing consumption.

### 2. Protection:

The differential pressure measurement allows the determination of the fan's pump status. It is the fan's own self-protection that can be implemented through a differential pressure measurement.

The digital input acquisition channels are connected to potential free contacts (dry contacts) and return an "all or nothing" value. They are used to monitor signals coming from, for example, emergency buttons, limit switch, etc.

The digital output acquisition channel receives "On-Off" values and its output is connected to potential free relay contacts. They are used to activate some drive mechanism, lamps, sirens, brakes, engines, etc.

An example of these electric and pneumatic signals from the fan can be:
- Typical protection signals:
   1. Temperatures of bearings (PT100)
   2. Winding temperature protection (PTC)
   3. Vibration protection (4..20 mA)
   4. Anti-pumping protection (pneumatic of the "all or nothing" type)
- Typical signals of measurement for environmental control:
   1. Fan pressure (pneumatic Pa)
   2. Fan flow (pneumatic m³/s)
   3. Other measurements, gases CO, CO2 ... (4..20 mA)

## Claims

1. Acquisition and monitoring system (35) for electric and pneumatic signals coming from ventilation devices (24), comprising:
• a processor (1) comprising means for the control of pneumatic and electric signals coming from at least one ventilation device (24);
• a plurality of acquisition channels (3, 4, 5, 6, 7, 8) for the signals coming from the ventilation device (24), that are connected to the processor (1);
• a communication protocol, for communicating with the ventilation device (24), for long distances and low-speed data transmission and a communication protocol, for communicating with the ventilation device (24), for short distances and high speed data transmission;
• a memory (2) where data of the signals coming from the ventilation device (24) are stored, said data previously scanned and sampled;
• a multi-pin connector (21) with high protection degree for electric connection with the ventilation device (24); **characterized in that** it comprises:
• a plurality of automatic pneumatic fittings (20) for pneumatic connection with the ventilation device (24); and
• a power connector (22) with screw terminals for power supply and communication with the ventilation device (24) by means of the long distance communication and low speed data transmission protocol;
• a metallic enclosure (16) with electromagnetic shielding with a protection degree IP≥66.

2. Acquisition and monitoring system (35) for electric and pneumatic signals coming from ventilation devices (24), according to claim 1, further comprising that the plurality of acquisition channels (3, 4, 5, 6, 7, 8) for the signals coming from the ventilation device (24) are selected from at least:
- an acquisition channel for temperature measuring signals (3);
- an acquisition channel for temperature controlling signals (4);
- an acquisition channel for signal measuring signals (5),
- an acquisition channel for pneumatic signals (6);
- an acquisition channel for digital inputs (7);
- an acquisition channel for digital outputs (8); and
- a combination thereof.

3. Acquisition and monitoring system (35) for electric and pneumatic signals coming from ventilation devices (24), according to claim 1, further comprising means for power supply (10) at 24 Vdc.

4. Acquisition and monitoring system (35) for electric and pneumatic signals coming from ventilation devices (24), according to claim 3, further comprising auxiliary means for power supply at less than 24 Vdc.

5. Acquisition and monitoring system (35) for electric and pneumatic signals coming from ventilation devices (24), according to claim 2, further comprising that the acquisition channel for temperature measuring signals (3) comprises at least 6 sub-channels of PT100 type.

6. Acquisition and monitoring system (35) for electric and pneumatic signals coming from ventilation devices (24), according to claim 2, further comprising that the acquisition channel for temperature controlling signals (4) comprises at least 6 sub-channels of PTC type.

7. Acquisition and monitoring system (35) for electric and pneumatic signals coming from ventilation devices (24), according to claim 2, further comprising that the acquisition channel for signal measuring signals (5) comprises at least 9 analogue reading sub-channels at 4-20 mA.

8. Acquisition and monitoring system (35) for electric and pneumatic signals coming from ventilation devices (24), according to claim 2, further comprising that the acquisition channel for pneumatic signals (6) comprises 6 channels for measuring differential pressure.

9. Acquisition and monitoring system (35) for electric and pneumatic signals coming from ventilation devices (24), according to claim 2, further comprising that the acquisition channel for digital inputs (7) comprises management means for 8 channels for potential-free digital inputs.

10. Acquisition and monitoring system (35) for electric and pneumatic signals coming from ventilation devices (24), according to claim 2, further comprising that the acquisition channel for digital outputs (8) comprises management means for 8 relay outputs.

11. Acquisition and monitoring system (35) for electric and pneumatic signals coming from ventilation devices (24), according to claim 1 further comprising that it comprises a communication connector (23) for the transmission of the protocol for short distances and high speed data transmission.

12. Acquisition and monitoring system (35) for electric and pneumatic signals coming from ventilation devices (24), according to claim 11, further comprising that the protocol for long distances and low speed data transmission is a RTU Modbus protocol and in that the protocol for short distances and high speed data transmission is a TCP Modbus protocol.

13. Acquisition and monitoring system (35) for electric and pneumatic signals coming from ventilation devices (24), according to claim 1 further comprising that the data of the sampled signals coming from the ventilation device (24) that are stored in the memory (2) are in CSV format.

## Patentansprüche

1. Erfassungs- und Überwachungssystem (35) für elektrische und pneumatische Signale aus Lüftungseinrichtungen (24), mit:
einem Prozessor (1) mit einer Einrichtung zur Steuerung pneumatischer und elektrischer Signale, die aus mindestens einer Lüftungseinrichtung (24) stammen;
mehreren Erfassungskanälen (3, 4, 5, 6. 7, 8) für die aus der Lüftungseinrichtung (24) stammenden Signale, wobei die Kanäle mit dem Prozessor (1) verbunden sind;
einem Kommunikationsprotokoll zur Kommunikation mit der Lüftungseinrichtung (24) über lange Strecken und mit Datenübertagung mit niedriger Geschwindigkeit und mit einem Kommunikationsprotokoll zur Kommunikation mit der Lüftungseinrichtung (24) über kurze Strecken und mit Datenübertragung mit hoher Geschwindigkeit;
einem Speicher (2), in welchem Daten der aus der Lüftungseinrichtung (24) stammenden Signale gespeichert sind, wobei die Daten zuvor gescannt und abgetastet sind;
einem Mehrstiftverbinder (21) mit einem hohen Schutzgrad zur elektrischen Verbindung mit der Lüftungseinrichtung (24);
**dadurch gekennzeichnet, dass** das System umfasst:
mehrere automatische pneumatische Anschlüsse (20) zur pneumatischen Verbindung mit der Lüftungseinrichtung (24); und
einen Leistungsverbinder (22) mit Schraubanschlüssen für die Leistungszufuhr und die Kommunikation mit der Lüftungseinrichtung (24) mittels des Protokolls für Langstreckenkommunikation und Datenübertragung mit niedriger Geschwindigkeit; ein metallisches Gehäuse (16) mit elektromagnetischer Abschirmung mit Schutzgrad IP ≥ 66.

2. Erfassungs- und Überwachungssystem (35) für elektrische und pneumatische Signale aus Lüftungseinrichtungen (24) nach Anspruch 1, wobei die mehreren Erfassungskanäle (3, 4, 5, 6, 7, 8) für die aus der Lüftungseinrichtung (24) stammenden Signale ausgewählt sind aus:
- einem Erfassungskanal für Temperaturmesssignale (3); und / oder
- einem Erfassungskanal für Temperatursteuersignale (4); und / oder
- einem Erfassungskanal für Signalmesssignale (5); und / oder
- einem Erfassungskanal für pneumatische Signale (6); und / oder
- einem Erfassungskanal für digitale Eingangssignale (7); und / oder
- einem Erfassungskanal für digitale Ausgangssignale (8); und / oder
- eine Kombination davon.

3. Erfassungs- und Überwachungssystem (35) für elektrische und pneumatische Signale aus Lüftungseinrichtungen (24) nach Anspruch 1, das ferner eine Einrichtung zur Leistungsversorgung (10) bei 24 Vdc aufweist.

4. Erfassungs- und Überwachungssystem (35) für elektrische und pneumatische Signale aus Lüftungseinrichtungen (24) nach Anspruch 3, das eine Hilfseinrichtung für eine Leistungsversorgung bei weniger als 24 Vdc aufweist.

5. Erfassungs- und Überwachungssystem (35) für elektrische und pneumatische Signale aus Lüftungseinrichtungen (24) nach Anspruch 2, wobei der Erfassungskanal für Temperaturmesssignale (3) mindestens 6 Unterkanäle des PT100-Typs aufweist.

6. Erfassungs- und Überwachungssystem (35) für elektrische und pneumatische Signale aus Lüftungseinrichtungen (24) nach Anspruch 2, wobei der Erfassungskanal für Temperatursteuersignale (4) mindestens 6 Unterkanäle des PTC-Typs aufweist.

7. Erfassungs- und Überwachungssystem (35) für elektrische und pneumatische Signale aus Lüftungseinrichtungen (24) nach Anspruch 2, wobei der Erfassungskanal für Signalmesssignale (5) mindestens 9 analoge Unterkanäle mit 4-20 mA aufweist.

8. Erfassungs- und Überwachungssystem (35) für elektrische und pneumatische Signale aus Lüftungseinrichtungen (24) nach Anspruch 2, wobei der Erfassungskanal für pneumatische Signale (6) 6 Kanäle zur Messung eines Differenzdrucks aufweist.

9. Erfassungs- und Überwachungssystem (35) für elektrische und pneumatische Signale aus Lüftungseinrichtungen (24) nach Anspruch 2, wobei der Erfassungskanal für digitale Eingangssignale (7) eine Verwaltungseinrichtung für 8 Kanäle für potentialfreie digitale Eingangssignale aufweist.

10. Erfassungs- und Überwachungssystem (35) für elektrische und pneumatische Signale aus Lüftungseinrichtungen (24) nach Anspruch 2, wobei der Erfassungskanal für digitale Ausgangssignale (8) eine Verwaltungseinrichtung für 8 Relais-Ausgänge aufweist.

11. Erfassungs- und Überwachungssystem (35) für elektrische und pneumatische Signale aus Lüftungseinrichtungen (24) nach Anspruch 1, das ferner einen Kommunikationsverbinder (23) für die Übertragung des Protokolls für kurze Strecken und Datenübertragung mit hoher Geschwindigkeit aufweist.

12. Erfassungs- und Überwachungssystem (35) für elektrische und pneumatische Signale aus Lüftungseinrichtungen (24) nach Anspruch 11, wobei das Protokoll für lange Strecken und Datenübertragung mit niedriger Geschwindigkeit ein RTU-Modbus-Protokoll ist und wobei das Protokoll für kurze Strecken und Datenübertragung mit hoher Geschwindigkeit ein TCP-Modbus-Protokoll ist.

13. Erfassungs- und Überwachungssystem (35) für elektrische und pneumatische Signale aus Lüftungseinrichtungen (24) nach Anspruch 1, wobei die Daten der abgetasteten Signale, die aus der Lüftungseinrichtung (24) stammen und in dem Speicher (2) gespeichert sind, in einem CSV-Format vorliegen.

## Revendications

1. Système (35) d'acquisition et de surveillance de signaux électriques et pneumatiques provenant de dispositifs de ventilation (24), comprenant :
• un processeur (1) comprenant des moyens pour la commande de signaux pneumatiques et électriques provenant d'au moins un dispositif de ventilation (24) ;
• une pluralité de canaux d'acquisition (3, 4, 5, 6, 7, 8) pour les signaux provenant du dispositif de ventilation (24), qui sont connectés au processeur (1) ;
• un protocole de communication, pour communiquer avec le dispositif de ventilation (24), pour une transmission de données à de longues distances et à basse vitesse, et un protocole de communication pour communiquer avec le dispositif de ventilation (24), pour une transmission de données sur de courtes distances et à haute vitesse ;
• une mémoire (2), dans laquelle sont stockées des données des signaux provenant du dispositif de ventilation (24), lesdites données ayant été précédemment scannées et échantillonnées ;
• un connecteur à plusieurs broches (21) avec un degré de protection élevé pour la connexion électrique avec le dispositif de ventilation (24) ;
**caractérisé en ce qu'**il comprend :
• une pluralité de raccords pneumatiques automatiques (20) pour une connexion pneumatique avec le dispositif de ventilation (24) ; et
• un connecteur d'alimentation (22) avec des bornes à vis pour l'alimentation électrique et la communication avec le dispositif de ventilation (24) au moyen du protocole de communication sur une longue distance et de transmission de données à basse vitesse ;
• une enceinte métallique (16) avec blindage électromagnétique avec degré de protection IP ≥ 66.

2. Système (35) d'acquisition et de surveillance de signaux électriques et pneumatiques provenant de dispositifs de ventilation (24) selon la revendication 1, comprenant en outre le fait que la pluralité de canaux d'acquisition (3, 4, 5, 6, 7, 8) pour le les signaux provenant du dispositif de ventilation (24) sont choisis parmi au moins :
- un canal d'acquisition pour les signaux de mesure de température (3) ;
- un canal d'acquisition pour les signaux de contrôle de la température (4) ;
- un canal d'acquisition pour des signaux de mesure de signaux (5),
- un canal d'acquisition pour les signaux pneumatiques (6) ;
- un canal d'acquisition pour les entrées numériques (7) ;
- un canal d'acquisition pour les sorties numériques (8) ; et
- une combinaison de ceux-ci.

3. Système (35) d'acquisition et de surveillance de signaux électriques et pneumatiques provenant de dispositifs de ventilation (24) selon la revendication 1, comprenant en outre des moyens d'alimentation électrique (10) en 24 Vcc.

4. Système (35) d'acquisition et de surveillance de signaux électriques et pneumatiques provenant de dispositifs de ventilation (24) selon la revendication 3, comprenant en outre des moyens auxiliaires d'alimentation électrique en moins de 24 Vcc.

5. Système (35) d'acquisition et de surveillance de signaux électriques et pneumatiques provenant de dispositifs de ventilation (24) selon la revendication 2, comprenant en outre le fait que le canal d'acquisition des signaux (3) de mesure de température comprend au moins 6 sous-canaux de type PT100.

6. Système (35) d'acquisition et de surveillance de signaux électriques et pneumatiques provenant de dispositifs de ventilation (24) selon la revendication 2, comprenant en outre le fait que le canal d'acquisition des signaux (4) de contrôle de température (4) comprend au moins 6 sous-canaux de type PTC.

7. Système (35) d'acquisition et de surveillance de signaux électriques et pneumatiques provenant de dispositifs de ventilation (24) selon la revendication 2, comprenant en outre le fait que le canal d'acquisition des signaux (5) de mesure de signaux comprend au moins 9 sous-canaux de lecture analogique en 4 à 20 mA.

8. Système (35) d'acquisition et de surveillance de signaux électriques et pneumatiques provenant de dispositifs de ventilation (24) selon la revendication 2, comprenant en outre le fait que le canal d'acquisition des signaux pneumatiques (6) comprend 6 canaux pour mesurer la pression différentielle.

9. Système (35) d'acquisition et de surveillance de signaux électriques et pneumatiques provenant de dispositifs de ventilation (24) selon la revendication 2, comprenant en outre le fait que le canal d'acquisition d'entrées numériques (7) comprend des moyens de gestion pour 8 canaux pour des entrées numériques sans potentiel.

10. Système (35) d'acquisition et de surveillance de signaux électriques et pneumatiques provenant de dispositifs de ventilation (24) selon la revendication 2, comprenant en outre le fait que le canal d'acquisition des sorties numériques (8) comprend des moyens de gestion de 8 sorties relais.

11. Système (35) d'acquisition et de surveillance de signaux électriques et pneumatiques provenant de dispositifs de ventilation (24) selon la revendication 1, comprenant en outre le fait d'inclure un connecteur de communication (23) pour la transmission du protocole de transmission de données sur de courtes distances et à haute vitesse.

12. Système (35) d'acquisition et de surveillance de signaux électriques et pneumatiques provenant de dispositifs de ventilation (24) selon la revendication 11, comprenant en outre le fait que le protocole de transmission de données sur de longues distances et à basse vitesse est un protocole RTU Modbus et que le protocole pour la transmission de données sur de courtes distances et à haute vitesse est un protocole TCP Modbus.

13. Système (35) d'acquisition et de surveillance de signaux électriques et pneumatiques provenant de dispositifs de ventilation (24) selon la revendication 1, comprenant en outre le fait que les données des signaux échantillonnés provenant du dispositif de ventilation (24), qui sont stockées dans la mémoire (2), sont au format CSV.
